(19) Europäisches Patentamt
European Patent Office
Office européen des brevets

(11) **EP 4 657 460 A1**

(12) **EUROPEAN PATENT APPLICATION**
published in accordance with Art. 153(4) EPC

(43) Date of publication:
03.12.2025 Bulletin 2025/49

(51) International Patent Classification (IPC):
*G16Z 99/00* (2019.01)

(21) Application number: 23918464.1

(52) Cooperative Patent Classification (CPC):
**G16Z 99/00**

(22) Date of filing: 21.08.2023

(86) International application number:
**PCT/JP2023/030027**

(87) International publication number:
**WO 2024/157504 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 25.01.2023 JP 2023009563

(71) Applicant: **JX Advanced Metals Corporation
Tokyo 105-8417 (JP)**

(72) Inventor: **SODA, Rikio
Tokyo 105-8417 (JP)**

(74) Representative: **Mewburn Ellis LLP
Aurora Building
Counterslip
Bristol BS1 6BX (GB)**

(54) **METHOD, PROGRAM, MEDIUM, AND DEVICE FOR SIMULATING BEHAVIOR OF PARTICLES**

(57)     The object of the present disclosure is to provide a means of simulating particles that eliminates at least some of the certain limitations.

In one aspect, the following invention is provided:
a program, a medium, a method using the program and/or the medium, and a device in which the program is installed, for simulating particles motion wherein they are capable of executing steps including:
reading a fluid data;
reading a first particle data;
coarse-graining particles at least based on the first particle data to generate a second particle data; and
calculating particles motion at least based on the fluid data and the second particle data;
wherein calculating the particles motion includes calculating the particles motion at least based on a drag coefficient of the fluid, and
wherein the drag coefficient is expressed by the following equation:

$$C_D = \frac{a}{R\,e} + \frac{b}{\sqrt{R\,e}} + c$$

(Equation 1)

(Wherein Re is the Reynolds number of the fluid, and a, b, and c are respectively constants that can be determined in dependence on sphericity of the first particles.

EP 4 657 460 A1

FIG. 3

Reading a fluid data (S10)

Reading a first particle data (S20)

Coarse-graining particles at least based on the first particle data to generate a second particle data(S30)

Calculating particles motion at least based on the fluid data and the second particle data (S40)

**Description**

[Technical Field]

The present disclosure relates to a method, program, medium, and device for simulating particles motion. In particular, it relates to a program for simulating coarse-grained particles motion, a method using the program, a medium storing the program, and a device in which the program is installed.

[Background Technology]

When handling powders, particles motion is sometimes simulated beforehand using a computer. The Distinct Element Method (DEM) or Discrete Element Method (DEM) is one of the popular methods.
Patent document 1 discloses, in a DEM simulation, a method for determining the electrostatic force acting among particles based on the degree of mixing of the particles when they are further mixed and stirred and based on the amount of electrostatic charge generated between particles.
Non-Patent Document 1 discloses a method using a Simpler Coarse-Grain Model (SCG model) for the purpose of reducing the computational load in the DEM.

[Prior Art Document]

[Patent Document]

[Patent Document 1] Japanese Patent Publication No. 2000-214134

[Non-Patent Document]

[Non-Patent Document 1] Processes 2021, 9(7), 1098

[Summary of Invention]

[Problem to be solved]

As mentioned above, various methods have been developed to simulate particles. However, these methods had various limitations. For example, the method used in Non-Patent Document 1 above could only be employed under limited conditions.
The object of the present disclosure is to provide a means of simulating particles that eliminates at least some of the above-mentioned limitations.

[Means to Solve the Problem]

In one aspect, in order to achieve the above-mentioned object, the present disclosure provides the following invention. A program for simulating particles motion in a fluid, and a non-transitory storage medium storing the program, the program being able to command a processor of an information processing device to execute steps including:

reading a fluid data;
reading a first particle data;
coarse-graining particles at least based on the first particle data to generate a second particle data; and
calculating particles motion at least based on the fluid data and the second particle data;
wherein generating the second particle data includes correcting at least one of mass of the first particle, density of the first particle, or force applied to the first particle so that an acceleration of the second particle is equal to an acceleration of the first particle, corresponding to coarse-graining the particles,
wherein calculating the particles motion includes calculating the particles motion at least based on a drag coefficient of the fluid, and
wherein the drag coefficient is expressed by the following equation:

[Formula 1]

$$C_D = \frac{a}{R\,e} + \frac{b}{\sqrt{R\,e}} + c$$

(Equation 1)
(wherein Re is the Reynolds number of the fluid and a, b, and c are respectively constants that can be determined in dependence on sphericity of the first particles)

In another aspect, in order to achieve the above-mentioned object, the present disclosure provides the following invention.
A method for simulating particles motion in a fluid using a program,
the method being executed by commanding a processor of an information processing device, the method including:

reading a fluid data;
reading particle a first particle data;
coarse-graining particles at least based on the first particle data to generate a second particle data; and
calculating particles motion at least based on the fluid data and the second particle data;
wherein generating for the second particle data includes correcting at least one of mass of the first particle, density of the first particle, or force applied to the first particle so that the acceleration of the second particle is equal to the acceleration of the first particle, corresponding to coarse-graining the particles
wherein calculating the particles motion includes calculating the particles motion at least based on the drag coefficient of the fluid, and
wherein the drag coefficient is expressed by the following equation:

[Formula 2]

$$C_D = \frac{a}{R\,e} + \frac{b}{\sqrt{R\,e}} + c$$

(Equation 1)
(wherein Re is the Reynolds number of the fluid and a, b, and c are respectively constant that can be determined in dependence on sphericity of the first particles)

In yet another aspect, the invention to achieve the above-mentioned object is a device in which the program is installed and/or a device comprising a non-transitory storage medium storing the program.

[Effects of the Invention]

In one aspect of the above invention, particles motion is calculated at least based on the drag coefficient expressed by the following equation.

[Formula 3]

$$C_D = \frac{a}{R\,e} + \frac{b}{\sqrt{R\,e}} + c$$

(Equation 5)

(wherein Re is the Reynolds number of the fluid and a, b, and c are respectively constant that can be determined in dependence on sphericity of the first particles)

This makes it possible to simulate for particles that are not spherical. It also makes it possible to calculate in a certain range of Reynolds number.

[Brief Description of Drawings]

[FIG. 1] An information processing device of the present disclosure in one embodiment is shown.

[FIG. 2] A system of the present disclosure in one embodiment is shown.

[Fig. 3] A method of the present disclosure in one embodiment is shown

[Fig. 4] The results of simulating particles motion in an example is shown.

[Fig. 5] The results of simulating particles motion in a comparative example 1 is shown.

[Fig. 6] The results of simulating particles motion in a comparative example 2 is shown.

[Description of Embodiments]

Specific embodiments for carrying out the inventions are described below. The following description is intended to facilitate understanding of the inventions. That is, it is not intended to limit the scope of the inventions.

1. Overview

In one embodiment, the present disclosure relates to a program for simulating particles motion in a fluid, a method using the program, and a method for producing a data using the program.

The technical field of application is not particularly limited and can be applied to any technical field of simulating particles motion in a fluid. Examples of technical fields include, but are not limited to: particles in cyclone separators, particles in stirring tanks, indoor dust, particles in jet mill grinders, particles in flotation, particles in sandblasting, particles in slurries, etc.

The size of particles is also not particularly limited, and the methods and programs of the present disclosure are applicable to any size of particles. For example, the size of particles may be milli-order, micro-order, or nano-order. Particles also include powders. The type of particles is also not particularly limited, and through the methods and programs of the present disclosure, motion for one type of particles may be simulated, or motion for two or more types of particles may be simulated. The shape of particles and the number of particles are also not particularly limited.

Preferably, the programs and etc. of the present disclosure are suitable for simulating particles motion in a dilute fluid. In other words, the programs of the present disclosure are suitable for simulating particles motion in situations where the concentration of particles in the fluid is low.

For example, without limitation, the programs and etc. of the present disclosure are suitable for simulating particles motion in situations where the Stokes number is expressed as being less than 100.

The terms "first particle" and "second particle" are used herein. The term "second particle" as used herein is related to coarse-graining the "first particle". However, when there are multiple types of particles to be simulated, there are several "first particles" corresponding to the number of such types, and several "second particles" corresponding to each of these types. Therefore, it should be noted that the scope to which the present disclosure can be applied is not limited to cases where one type of particle is handled, although it will be reiterated.

2. Environment for executing program

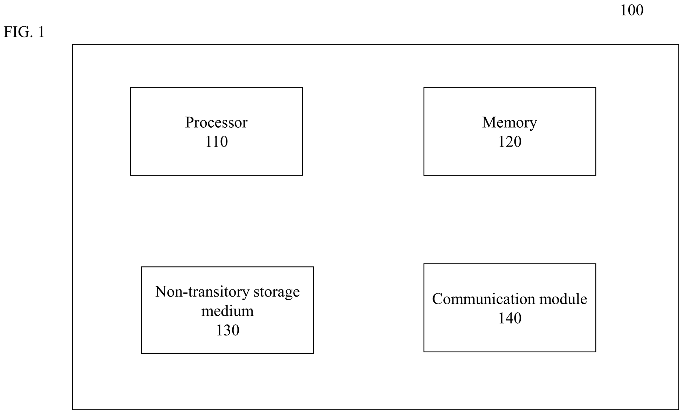

The environment for executing program and method is not particularly limited, and a typical information processing device can be used. Typically, the information processing device (100) can include a processor (110), memory (120), a non-transitory storage medium (130), and a communication module (140), as shown in Fig. 1.

For example, the information processing device (100) may include, but is not limited to: a server, a personal computer, a tablet device, a smartphone, a smart watch, smart glasses, etc.

The program is stored on a non-transitory storage medium (130, for example, HDD, SSD, etc.), loaded into memory (120, for example, RAM, etc.) as appropriate, and executed by a processor (110, for example, CPU, etc.). If necessary, the program can be connected to a network through a communication module (140) to transmit and receive information.

In one embodiment, a program may be installed in one information processing device (100) as application software, and may be executed by the information processing device (100).

In other embodiment, the number of information processing device (100) is not limited to one, and multiple information processing devices (100) may be used as needed. In that case, the functionality of the program may be distributed to multiple information processing devices (100).

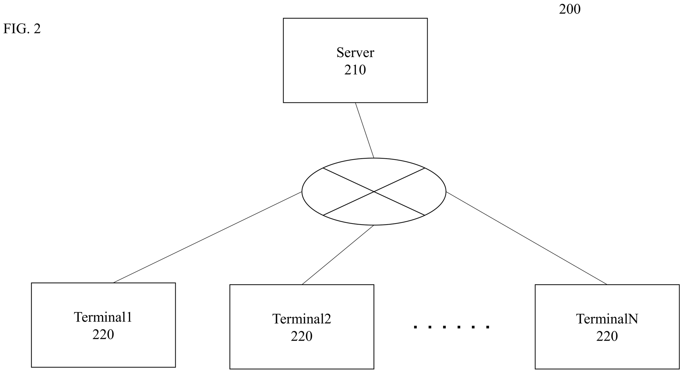

Alternatively, as shown in Fig. 2, a system (200) may be configured in which a server (210) and terminals (220) are interconnected through a network. In the system (200), the terminals (220) may receive input from users and may transmit at least a portion of the received input to the server (210). The server (210) may receive the input information transmitted from the terminals (220), may process the information, and may transmit a portion of output to the terminals (220). The terminals (220) may then receive the output information transmitted from the server (210) and may display it at the terminals (220).

In another aspect, therefore, the present disclosure also relates to an information processing device including the program of the present disclosure, and a system including the information processing device. In yet another aspect, the present disclosure relates to a terminal and/or a server that constitutes a system of the present disclosure. The internal configuration of the terminals and the server may be same as or similar to that of the information processing device shown in Fig. 1. In another aspect, the present disclosure relates to a storage medium (e. g., a non-transitory storage medium, for example, a computer readable non-transitory storage medium, such as HDD, SSD, flash memory, optical disk, etc.) storing a program.

3. Each step executed by a program

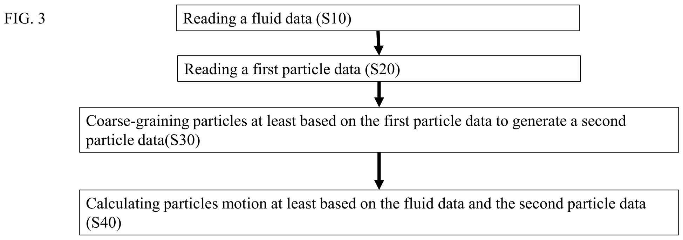

In one embodiment, the program of the present disclosure includes at least the following steps as shown in Fig. 3:

·reading a fluid data(S10)
·reading a first particle data(S20)
coarse-graining particles at least based on the first particle data to generate a second particle data(S30)
calculating particles motion at least based on the fluid data and the second particle data (S40)

Wherein generating the second particle data includes correcting at least one of mass of the first particle, density of the first particle, or force applied to the first particle so that the acceleration of the second particle is equal to the acceleration of the first particle, corresponding to coarse-graining the particles.

Calculating the particles motion includes calculating the particles motion at least based on the drag coefficient of the fluid.

The drag coefficient is expressed by the following equation:

[Formula 4]

$$C_D = \frac{a}{Re} + \frac{b}{\sqrt{Re}} + c$$

(Equation 6) (wherein Re represents the Reynolds number of the fluid and a, b, and c are respectively constant that can be determined in dependence on sphericity of the first particles)

Each step is described in detail below.

3-1. Step of reading the fluid data

In one embodiment, as described above, the present disclosure relates to a program and etc. for simulating the particles motion in a fluid. Therefore, it is necessary to read a fluid data in order to simulate it.

The fluid data may be read by a user's entering a given information through an interface (for example, a form for input displayed on a display). Alternatively, the fluid data may be read by reading a given file (for example, when duplicating from a previous simulation data and etc.).

The fluid data may include, without limitation, one or more of the following: fluid density, fluid viscosity, fluid velocity, etc. Preferably, the fluid data can further include one or more of the following: fluid temperature, spatial coordinates (for example, X, Y, Z), and X, Y, Z components of fluid velocity, etc.

3-2. Step of reading the first particle data

In order to simulate, it is necessary to read the particle data, not only the fluid data. Both steps of reading can be done one after the other, or at the same time.

The term "first particle" as used herein means an original particle to be simulated.

The first particle data may include, without limitation, one or more of the following: particle size (for example, diameter in the case of spherical particles), number of particles, shape (for example, sphericity), and mass. Preferably, the first particle data can include one or more of the following: particle size (e. g., diameter in the case of spherical particles), shape (for example, sphericity), Poisson's ratio, Young's modulus, friction coefficient, repulsion coefficient, contact angle, substance name, mass per particle, volume, number of particles, mass, etc.

3-3. Step of generating the second particle data

At least based on the first particle data described above, the second particle data is generated. Preferably, the second particle data may be generated further based on the fluid data described above. A large number of particles increases the computational load for simulating. This makes it more time consuming to obtain simulation results.

For the purpose of reducing the computational load, the number of particles to be simulated for can be reduced and the particles motion can be analyzed using particles with a size larger than the actual size of the particles.

For the purpose of facilitating understanding of the invention, this section first describes the method shown in Non-Patent Document 1, followed by a description of the step of generating the second particle data in the program according to one embodiment of the present disclosure.

First, the acceleration of a particle can be expressed by the following relational equation.

$$a = F_D/m$$

$$(Equation\ 7)$$

Wherein

a: Acceleration
$F_D$: Force applying to the particle from the fluid m: Mass

The force $F_D$, which is the force applying to the particle from the fluid, can be expressed by the following relational equation.
[Formula 5]

[Formula 5]

$$\mathbf{F_D} = C_D A \rho_f \frac{|\mathbf{u_r}|}{2} \mathbf{u_r}$$

Wherein

$C_D$: Drag coefficient (or resistance coefficient)
A: Projected area of a particle on a plane perpendicular to the direction of fluid flow
$\rho_f$: Density of the fluid
$u_r$: Relative velocity of the particle relative to the fluid The projected area A for particle that is not spherical may be calculated in an appropriate manner depending on a situation. For example, since the particles are oriented such that the surface with the smallest projected area faces the fluid flow, the projected area in that orientation may be used. Alternatively, the cross-sectional area of a sphere that has the same volume as the non-spherical particles (i. e., the area of the cross-section through the center of the sphere) may be used.

The drag coefficient $C_D$ can expressed by the following relational equation.

[Formula 6]

$$C_D = \frac{24}{Re} \quad \left( Re < 2 : Stokes' \ law \right)$$

(Equation 9)

Wherein

Re: Reynolds number (the above equation is based on the premise that the Reynolds number is less than 2 and the shape of the particles are spherical).

In addition, the Reynolds number Re can be expressed by the following equation.

[Formula 7]

$$Re = \frac{d|\mathbf{u}_r|\rho_f}{\mu_f}$$

(Equation 10)

Wherein

d: Particle diameter
$\mu_f$: Fluid viscosity

Therefore, the acceleration in coarse-grained particles (CG, Coarse-Grained) can be expressed by the following relational equation.

[Formula 8]

$$\mathbf{a}_{CG} = \mathbf{F}_{D, \ CG} \Big/ m_{CG}$$

(Equation 11)

[Formula 9]

$$= \frac{C_D A \rho_f \dfrac{|\mathbf{u}_r|}{2} \mathbf{u}_r}{\dfrac{4}{3}\pi \left(\dfrac{d_{CG}}{2}\right)^3 \rho_{p, \ CG}} = \frac{\dfrac{\pi}{8} d_{CG}^2 C_D \rho_f |\mathbf{u}_r| \mathbf{u}_r}{\dfrac{\pi}{6} d_{CG}^3 \rho_{p, \ CG}} = \frac{\dfrac{\pi}{8} \dfrac{24 \mu_f}{d_{CG}|\mathbf{u}_r|\rho_f} d_{CG}^2 \rho_f |\mathbf{u}_r| \mathbf{u}_r}{\dfrac{\pi}{6} d_{CG}^3 \rho_{p, \ CG}}$$

(Equation 12)

Wherein, $\rho_p$: Particle density

Based on these relational equations, the equations are corrected so that the coarse-grained particles (CG, Coarse-Grained) and the original particles (O, original) have the same acceleration.

To do so, the following relational equation should be solved.

$$a_{CG} = a_O$$

(Equation 13)

Wherein

$a_{CG}$: Acceleration of coarse-grained particles
$a_O$: Acceleration of original particles

Applying to the above equation, the following relational equation is derived.

[Formula 10]

$$\frac{\frac{\pi}{8}\frac{24\mu_f}{d_{CG}|u_r|\rho_f}d_{CG}^2\rho_f|u_r|u_r}{\frac{\pi}{6}d_{CG}^3\rho_{p,\ CG}} = \frac{\frac{\pi}{8}\frac{24\mu_f}{d_O|u_r|\rho_f}d_O^2\rho_f|u_r|u_r}{\frac{\pi}{6}d_O^3\rho_{p,\ O}}$$

(Equation 14)

Rearranging this equation yieldsthe following relational equation.

[Formula 11]

$$\rho_{p,\ CG} = \frac{d_O^2}{d_{CG}^2}\rho_{p,\ O}$$

(Equation 15)

Therefore, a correction can be made for the density of the original particles by the ratio of the squares of the particle size ratios of the original and coarse-grained particles, so that the acceleration of the original particles is equal to the acceleration of the coarse-grained particles.

As for the effect of the above correction, see, for example, the experimental results (for example, Fig. 1, etc.) shown in Non-Patent Document 1.

In one embodiment, the program may be configured to allow a user to input, for example, a magnification factor (coarsening ratio) for the size of the particle, along with the size of the original particle, through the interface, rather than directly receiving the correction value input by the user.

For example, the coarsening ratio may be entered as the number "2" to double the size of the original particle, or alternatively, may be entered as the number "200" (%) expressed as a percentage.

The program may also adjust the number of particles according to the coarsening ratio of the particles. Preferably, the number of particles may be adjusted according to the volume that has changed according to the coarsening process. For example, if the coarsening ratio of a particle is set to 2x, the volume of the particle will increase by a factor of 8X. The number of particles may be adjusted to 1/8 accordingly.

Here, the following value is used as the drag coefficient in the above method.

[Formula 12]

$$C_D = \frac{24}{Re} \quad \left(Re < 2 : Stokes'\ law\right)$$

(Equation 16)

However, the above drag coefficient is based on Stokes' Law, assuming a Reynolds number of less than 2 and spherical particles.

Thus, it cannot be applied outside of these assumptions.

In the method according to one embodiment of the present disclosure, the following drag coefficient is used instead of the above.

[Formula 13]

$$C_D = \frac{a}{Re} + \frac{b}{\sqrt{Re}} + c$$

(Equation 17)

The above equation was proposed by H. N. Yow et al. (Advanced Powder Technol., Vol. 16, No. 4, pp. 363-372 (2005)).

H. N. Yow et al. state that the above equation is applicable to particles with a wide range of sphericities, a wide range of Reynolds numbers, and a variety of shapes.

In the program of one embodiment, therefore, the applicable sphericity is not limited, and may preferably be from 0.006 to 1, and even more preferably from 0.034 or more. In the program of one embodiment, the applicable Reynolds number is not particularly limited, and may preferably be from $10^{-2}$ to $10^5$, and even more preferably 2 or more. Furthermore, in the program of one embodiment, the shape of the applicable particles is not particularly limited, and, for example, may be spherical, cubic, cuboctahedral, octahedral, tetrahedral, disk, cylinder, cuboid, and etc.

When the drag coefficient by H. N. Yow et al. described above is adopted, the acceleration is calculated as follows.

[Formula 14]

$$a_{CG} = \frac{F_{D,\ CG}}{m_{CG}} = \frac{\frac{\pi}{8}d_{CG}^2 C_D \rho_f |u_r| u_r}{\frac{\pi}{6}d_{CG}^3 \rho_{p,\ CG}} = \frac{\frac{\pi}{8}\left(\frac{a}{Re} + \frac{b}{\sqrt{Re}} + c\right)d_{CG}^2 \rho_f |u_r| u_r}{\frac{\pi}{6}d_{CG}^3 \rho_{p,\ CG}}$$

(Equation 18)

[Formula 15]

$$a_{CG} = \frac{\frac{\pi}{8}\left(\frac{a}{Re}\right)d_{CG}^2 \rho_f |u_r| u_r}{\frac{\pi}{6}d_{CG}^3 \rho_{p,\ CG}} + \frac{\frac{\pi}{8}\left(\frac{b}{\sqrt{Re}}\right)d_{CG}^2 \rho_f |u_r| u_r}{\frac{\pi}{6}d_{CG}^3 \rho_{p,\ CG}} + \frac{\frac{\pi}{8}(c)d_{CG}^2 \rho_f |u_r| u_r}{\frac{\pi}{6}d_{CG}^3 \rho_{p,\ CG}}$$

(Equation 19)

The three terms in the above equation are replaced with $a_{1,CG}$, $a_{2,CG}$, and $a_{3,CG}$, respectively. These correspond to the terms containing the constants a, b, and c, respectively.

Where the equation $a_{CG} = a_O$ needs to be solved, it is understood that the relation $a_{1,O} + a_{2,O} + a_{3,O} = a_{1,CG} + a_{2,CG} + a_{3,CG}$ should hold. Then, by solving this equation and deriving the relationship between $\rho_O$ and $\rho_{CG}$, the same correction as described above can be made (in the above, the correction is made for density by the ratio of the square of the particle size). However, this equation was very complicated and could not be solved. Therefore, those skilled in the art did not even think of replacing the drag coefficient in the method shown in Non-Patent Document 1 with the drag coefficient proposed by H. N. Yow et al. In this regard, while solving the equation $a_{CG} = a_O$, i. e., $a_{1,O} + a_{2,O} + a_{3,O} = a_{1,CG} + a_{2,CG} + a_{3,CG}$, the inventors of the present invention found that for this equation to hold, the terms involving constants a, b, and c must be equal.

Therefore, the inventors of the present invention set up three types of equation as follows.

[Formula 16]

$$\begin{cases} a_{1,CG} = a_{1,0} \\ a_{2,CG} = a_{2,0} \\ a_{3,CG} = a_{3,0} \end{cases}$$

(Equation 20)

Solving the three equations, the equation is expressed as follows

[Formula 17]

$$\begin{cases} \dfrac{\frac{\pi}{8}\frac{a\mu_f}{d_{CG}|u_r|\rho_f}d_{CG}^2\rho_f|u_r|u_r}{\frac{\pi}{6}d_{CG}^3\rho_{1,p,CG}} = \dfrac{\frac{\pi}{8}\frac{a\mu_f}{d_O|u_r|\rho_f}d_O^2\rho_f|u_r|u_r}{\frac{\pi}{6}d_O^3\rho_{p,O}} \qquad \dfrac{1}{d_{CG}^2\rho_{1,p,CG}} = \dfrac{1}{d_O^2\rho_{p,O}} \qquad \rho_{1,p,CG} = \dfrac{d_O^2}{d_{CG}^2}\rho_{p,O} \\[3em] \dfrac{\frac{b\pi}{8}\sqrt{\frac{\mu_f}{d_{CG}|u_r|\rho_f}}d_{CG}^2\rho_f|u_r|u_r}{\frac{\pi}{6}d_{CG}^3\rho_{2,p,CG}} = \dfrac{\frac{b\pi}{8}\sqrt{\frac{\mu_f}{d_O|u_r|\rho_f}}d_O^2\rho_f|u_r|u_r}{\frac{\pi}{6}d_O^3\rho_{p,O}} \qquad \dfrac{1}{d_{CG}^{1.5}\rho_{2,p,CG}} = \dfrac{1}{d_O^{1.5}\rho_{p,O}} \qquad \rho_{2,p,CG} = \dfrac{d_O^{1.5}}{d_{CG}^{1.5}}\rho_{p,O} \\[3em] \dfrac{\frac{\pi}{8}cd_{CG}^2\rho_f|u_r|u_r}{\frac{\pi}{6}d_{CG}^3\rho_{3,p,CG}} = \dfrac{\frac{\pi}{8}cd_O^2\rho_f|u_r|u_r}{\frac{\pi}{6}d_O^3\rho_{p,O}} \qquad \dfrac{1}{d_{CG}^1\rho_{3,p,CG}} = \dfrac{1}{d_O^1\rho_{p,O}} \qquad \rho_{3,p,CG} = \dfrac{d_O^1}{d_{CG}^1}\rho_{p,O} \end{cases}$$

(Equation 21)

Therefore, when calculating the acceleration of coarse-grained particles, in each of the three terms, it is sufficient to apply a correction by multiplying the original particle density by the particle size ratio (squared ratio, 3/2 ratio, or 1st power ratio), respectively. The advantage of the above equation's solution is its simplicity and intuitive handling as a mathematical formula.

In the above method, the density is corrected. The variable to be corrected is not limited to the density, and for example, other variables may also be corrected. For example, when correcting for mass, the simulation can be executed based on setting the equation "$m_{CG} = km_O$", and then calculating a constant k such that "$a_{CG} = a_O$" ($F_{D,CG}/m_{CG} = F_{D,O}/m_O$) holds, and then the acceleration of the coarse-grained particle may be calculated as "$F_{D,CG}/(km_O)$" Thus, correcting the acceleration of the second particle to be equal to the acceleration of the first particle includes correcting at least one of mass of the first particle, density of the first particle, or force applied to the first particle

The values of a, b, and c in the following equation may be set appropriately according to sphericity as proposed by H. N. Yow et al.

[Formula 18]

$$C_D = \frac{a}{Re} + \frac{b}{\sqrt{Re}} + c$$

(Equation 22)

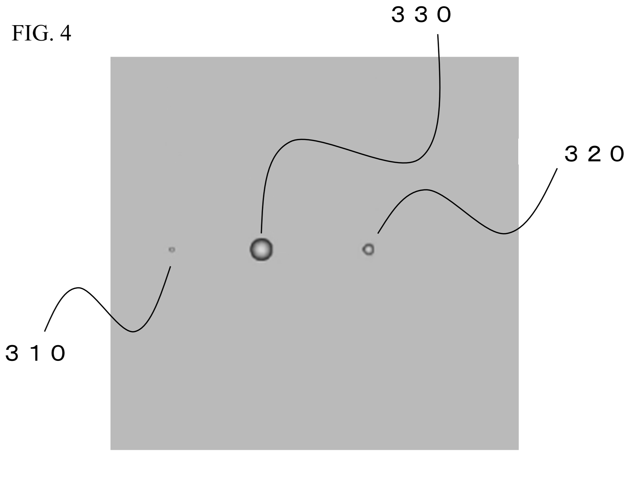

For example, as shown in Fig. 4, Table 1 of H. N. Yow et al. and others, a curve representing sphericity, Reynolds number and drag coefficient can be created by experiment or other means, and the values of a, b and c fitted to this curve can be derived. Preferably, each value of a, b, and c may be determined according to the sphericity ψ as follows.

[Formula 19]

$$a = 1 5 . 2 1 + \frac{1 0 . 8 2}{\psi} - \frac{0 . 1 4}{\psi^2}$$

(Equation 23)

[Formula 20]

$$b = 1 3 . 4 1 - \frac{1 0 . 6 4}{\psi} - \frac{0 . 0 6}{\psi^2}$$

(Equation 24)

[Formula 21]

$$c = - 8 . 8 2 + \frac{5 . 7 0}{\psi} + \frac{0 . 2 3}{\psi^2}$$

(Equation 25)

Wherein ψ is the sphericity of the particle. The sphericity is the sphericity defined by Wadell. That is, the sphericity is expressed by the following equation:

(sphericity) = (surface area of a sphere having the same volume as that of the first particle) / (surface area of the first particle)

The method described above is used to correct the parameters pertaining to the particles and generate the second particle data.

When simulating more than one type of particle, the above step of generating the second particle data can be repeated according to the number of types.

By adopting the method described above, it is possible to apply the coarse-grained simulation to non-spherical particles, which was not possible with the method of Non-Patent Document 1. Furthermore, it is possible to apply the coarse-grained simulation to situations with a Reynolds number of 2 or more (for example, the Allen's region (2<Re<500) and Newton' region (500<Re<10$^5$), to which the conventional SCG model are not applicable.

When dealing with non-spherical particles, the size of the particles may be set in an arbitrary way. For example, the particle's size can be defined as the diameter of a sphere with the same volume. Alternatively, twice the distance from the center portion of the particle to the apex portion may be adopted as the size of the particle (for example, in the case of a cube, cuboid, tetrahedron, octahedron, etc.). Alternatively, for cylinders or disks, the particle's size can be defined as twice the distance from the particle's center to any point on its circumference. Alternatively, in an arbitrary shape, the projected area may be derived based on its volume, and the diameter of a sphere having an equal projected area may be adopted as the size of the particle.

3-4. Step of calculating the particles motion

After generating the second particle data, the particles motion is calculated. The method of calculating the particles motion is, though not particularly limited, typically DEM.

In this step, the calculation is at least based on the fluid data and the second particle data. In some cases, the calculation may be further based on a gravity data.

Then, when calculating the particles motion in an inner space of the container, the calculation may be further based on the data of the inner space of a container. In this case, the program may in advance execute the step of reading the data of the internal space of the container.

By executing the calculation, the program can generate a data that records the location of each particle at each time. This data can then be read by a certain program to display the particles motion on the screen.

[Example]

The following shows the results of simulating the particles motion for sedimentation of particles in liquid. The conditions were set as follows.

Particle shape: spherical
Original particle size: 1 mm
Size of coarse-grained particles (or coarsening ratio): 1 mm (1x), 2 mm (2x), 4 mm (4x)
Fluid density: 1000 kg/m$^3$
Fluid viscosity: $8.9 \times 10^{-4}$ Pa·s
Particle density: 1200 kg/m$^3$
Force applied to particles: Gravity g (9.8 m/s$^2$)

The following equations were used to calculate the constants a, b, and c which are used for calculating the drag coefficient $C_D$.

[Formula 22]

$$a = 15.21 + \frac{10.82}{\psi} - \frac{0.14}{\psi^2}$$

(Equation 26)

[Formula 23]

$$b = 13.41 - \frac{10.64}{\psi} - \frac{0.06}{\psi^2}$$

(Equation 27)

[Formula 24]

$$c = -8.82 + \frac{5.70}{\psi} + \frac{0.23}{\psi^2}$$

(Equation 28)

In this case, the sphericity can be represented by $\psi = 1$ since the shape of the particle were spherical.

First, the theoretical value of the terminal velocity under the above setting conditions was calculated.

Since the Reynolds number Re was unknown, the present inventors assumed that the Reynolds number Re was in the Allen's region (2 < Re < 500) and calculated the terminal velocity by applying the following equation.

[Formula 25]

$$u_\infty = \left\{ \frac{4}{225} \frac{(\rho_p - \rho_f)^2 g^2}{\mu \rho_f} \right\}^{1/3} d = 0.0425 \ (\mathrm{m}/\mathrm{s})$$

(Equation 29)

**EP 4 657 460 A1**

According to the above setting conditions, each variable was as follows.

$$\rho_p = 1200 \ (kg/m^3)$$

$$\rho_f = 1000 \ (kg/m^3)$$

$$g = 9.8 \ (m/s^2)$$

$$\mu = 8.9 \times 10^{-4} (Pa \cdot s)$$

$$d = 10^{-3} (m)$$

As mentioned above, the Reynolds number Re can be expressed by the following relational equation.

[Formula 26]

$$Re = \frac{d|\mathbf{u}_r|\rho_f}{\mu_f}$$

(Equation 30)

Wherein

d: Diameter of particles
$\mu_f$: Fluid viscosity

Therefore, the above theoretical values can be applied to the above equation to calculate the Reynolds number as follows.

[Formula 27]

$$Re = \frac{d|\mathbf{u}_r|\rho_f}{\mu_f} = \frac{0.001 * 0.0425 * 1000}{8.9 \times 10^{-4}} = 48$$

(Equation 31)

From this, it was confirmed that the Reynolds number is within the Allen' region (2 < Re < 500) and that it is consistent with the above assumption. Therefore, it was confirmed that the terminal velocity (0.0425 m/s) calculated on the assumption that it is in the Allen range is correct.

Next, the present inventors simulated the motion of particles sedimentation in liquid based on the above setting conditions. Three types of corrections were made for the correction of the acceleration that was executed when coarse-graining the particles. The first corresponds to Example, in which the correction of the acceleration was based on the above (Equation 21). The second corresponds to Comparative Example, in which the correction of the acceleration was based on the above (Equation 15) (Comparative Example 1). The third corresponds to Comparative Example, in which the correction of the acceleration was not executed (Comparative Example 2).

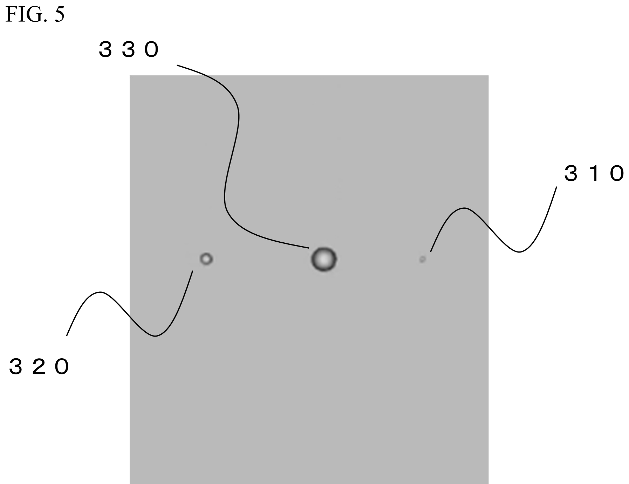

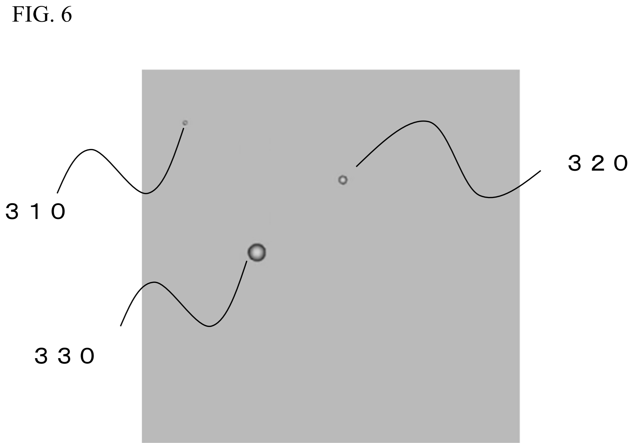

The simulation results are shown in Figures 4 through 6. In Example (Fig. 4), all the particles settled at the same velocity. In Comparative Example 1 (Fig. 5), all the particles also settled at the same velocity. On the other hand, in Comparative Example 2 (Figure 6), the largest coarse-grained particles settled fastest.

Thus, Example and Comparative Example 1 showed that the coarse-grained particles move the same way as the original particles , even after coarse-graining.

Here, the terminal velocities of each particle in Example and Comparative Example 1 were calculated when simulated. The results were as follows.

Example: 0.0422 m/s
Comparative Example 1: 0.1223 m/s

Therefore, the terminal velocity of each particle in Example (0.0422 m/s) is almost identical to the theoretically

14

calculated terminal velocity (0.0425 m/s). On the other hand, the terminal velocity of each particle (0.1223 m/s) in Comparative Example 1, which corresponds to the conventional SCG model, deviates significantly from the theoretically calculated terminal velocity. In other words, Example shows that it is possible to obtain consistent simulation results in situations where the Reynolds number is equal to or greater than 2 (Re = 48).

The detailed embodiments of the present invention have been described. The above embodiments are merely an example, and the present invention is not limited to the above embodiments. For example, the technical features disclosed in one of the above embodiments can be applied to other embodiments. Furthermore, unless indicated specifically, regarding a particular method, some steps may be switched with the order of some other steps, and further steps may be inserted between certain two steps. The scope of the present invention is defined by the appended claim.

4. Appendix

In one aspect, the present disclosure includes the following inventions.

(Invention 1)

A program for simulating particles motion in a fluid,
the program being able to command a processor of an information processing device to execute steps including:

reading a fluid data;
reading a first particle data;
coarse-graining particles at least based on the first particle data to generate a second particle data; and
calculating particles motion at least based on the fluid data and the second particle data;
wherein generating the second particle data includes correcting at least one of mass of the first particle, density of the first particle, or force applied to the first particle so that an acceleration of the second particle is equal to an acceleration of the first particle, corresponding to coarse-graining the particles,
wherein calculating the particles motion includes calculating the particles motion at least based on a drag coefficient of the fluid, and
wherein the drag coefficient is expressed by the following equation:

[Formula 28]

$$C_D = \frac{a}{Re} + \frac{b}{\sqrt{Re}} + c$$

(Equation 1)
(wherein Re is the Reynolds number of the fluid and a, b, and c are respectively constants that can be determined in dependence on sphericity of the first particles)

(Invention 2)

The program of Invention 1, wherein correcting includes correcting at least one of the mass of the first particle, the density of the first particle, or the force applied to the first particle so that when the acceleration of the first particle and the acceleration of the second particle are respectively expressed using the drag coefficient, the terms for the constants a, b, and c for the first particle are respectively equal to those for the second particle.

(Invention 3)

The program of Invention 1 or 2, wherein a, b, and c are determined by the following equations 2 through 4.

[Formula 29]

$$a = 15.21 + \frac{10.82}{\psi} - \frac{0.14}{\psi^2}$$

(Equation 2)

[Formula 30]

$$b = 13.41 - \frac{10.64}{\psi} - \frac{0.06}{\psi^2}$$

(Equation 3)

[Formula 31]

$$c = -8.82 + \frac{5.70}{\psi} + \frac{0.23}{\psi^2}$$

(Equation 4)
(wherein $\psi$ is the sphericity of the particle)

(Invention 4)

The program of Invention 1 or 2, the program being capable of executing calculating the constants a, b, and c in advance, wherein calculating the constants a, b, and c in advance includes fitting from an experimental data including one or more of sphericity, drag coefficient, and Reynolds number.

(Invention 5)

The program of any one of Inventions 1-4,

the step further including reading coarsening ratio,
wherein generating the second particle data includes setting a size of the second particle at least based on the first particle data and the coarsening ratio.

(Invention 6)

The program of any one of Inventions 1-5, wherein the first particle data includes at least one of a size of particle, a number of particle, sphericity of particle, or mass of particle.

(Invention 7)

A method including executing the program of any one of Inventions 1-6 using an information processing device.

(Invention 8)

A method for producing data of simulating the particles motion, the method including executing the program of any one of Inventions 1-6 using an information processing device.
In another aspect, the present disclosure includes the following inventions.

(Invention 1)

A method for simulating the particles motion in a fluid by using a program, comprising the steps of:

reading a fluid data;
reading a first particle data;
coarse-graining particles at least based on the first particle data to generate a second particle data; and
calculating particles motion at least based on the fluid data and the second particle data;
wherein generating the second particle data includes correcting at least one of mass of the first particle, density of the first particle, or force applied to the first particle so that an acceleration of the second particle is equal to an acceleration of the first particle, corresponding to coarse-graining the particles,

wherein calculating the particles motion includes calculating the particles motion at least based on a drag coefficient of the fluid, and

wherein the drag coefficient is expressed by the following equation:

[Formula 32]

$$C_D = \frac{a}{Re} + \frac{b}{\sqrt{Re}} + c$$

(Equation 1)

(wherein Re is the Reynolds number of the fluid and a, b, and c are respectively constants that can be determined in dependence on sphericity of the first particles)

(Invention 2)

The method of Invention 1, wherein correcting includes correcting at least one of the mass of the first particle, the density of the first particle, or the force applied to the first particle so that when the acceleration of the first particle and the acceleration of the second particle are respectively expressed using the drag coefficient, the terms for the constants a, b, and c for the first particle are respectively equal to those for the second particle.

(Invention 3)

The method of Invention 1 or 2, wherein a, b, and c are determined by the following equations 2 through 4.

[Formula 33]

$$a = 15.21 + \frac{10.82}{\psi} - \frac{0.14}{\psi^2}$$

(Equation 2)

[Formula 34]

$$b = 13.41 - \frac{10.64}{\psi} - \frac{0.06}{\psi^2}$$

(Equation 3)

[Formula 35]

$$c = -8.82 + \frac{5.70}{\psi} + \frac{0.23}{\psi^2}$$

(Equation 4)

(wherein $\psi$ is the sphericity of the particle)

(Invention 4)

The method of any one of Inventions 1-3, further comprising the steps of calculating the constants a, b, and c in advance, wherein calculating the constants a, b, and c in advance includes fitting from an experimental data including one or more of sphericity, drag coefficient, and Reynolds number.

(Invention 5)

The method of any one of Inventions 1-4,

further comprising reading coarsening ratio,
wherein generating the second particle data includes setting a size of the second particle at least based on the first particle data and the coarsening ratio.

(Invention 6)

The method of any one of Inventions 1-5, wherein the first particle data includes at least one of a size of particle, a number of particle, sphericity of particle, or mass of particle.

(Invention 7)

A non-transitory storage medium storing a program for simulating the particles motion in a fluid, the program being able to command a processor of an information processing device to execute steps including:

reading a fluid data;
reading a first particle data;
coarse-graining particles at least based on the first particle data to generate a second particle data; and
calculating particles motion at least based on the fluid data and the second particle data;
wherein generating the second particle data includes correcting at least one of mass of the first particle, density of the first particle, or force applied to the first particle so that an acceleration of the second particle is equal to an acceleration of the first particle, corresponding to coarse-graining the particles,
wherein calculating the particles motion includes calculating the particles motion at least based on a drag coefficient of the fluid, and
wherein the drag coefficient is expressed by the following equation:

[Formula 36]

$$C_D = \frac{a}{Re} + \frac{b}{\sqrt{Re}} + c$$

(Equation 1)
(wherein Re is the Reynolds number of the fluid and a, b, and c are respectively constants that can be determined in dependence on sphericity of the first particles)

(Invention 8)

A device comprising the non-transitory storage medium of Invention 7.

[Explanation of references]

100 Information processing device
110 Processor
120 Memory
130 Non-transitory storage medium
140 Communication module
200 System
210 Server
220 Terminal
310 Original particles

320 Particles with size of 2 mm
330 Particles with size of 4 mm

**Claims**

1. A method for simulating particles motion in a fluid using a program,
the program causing an information processing device to execute steps comprising:

reading a fluid data;
reading a first particle data;
coarse-graining particles at least based on the first particle data to generate a second particle data; and
calculating particles motion at least based on the fluid data and the second particle data;
wherein generating the second particle data includes correcting at least one of mass of the first particle, density of
the first particle, or force applied to the first particle so that an acceleration of the second particle is equal to an
acceleration of the first particle, corresponding to coarse-graining the particles,
wherein calculating the particles motion includes calculating the particles motion at least based on a drag
coefficient of the fluid, and
wherein the drag coefficient is expressed by the following equation:

[Formula 1]

$$C_D = \frac{a}{R\,e} + \frac{b}{\sqrt{R\,e}} + c$$

(Equation 1)
(wherein Re is the Reynolds number of the fluid and a, b, and c are respectively constants that can be determined
in dependence on sphericity of the first particles)

2. The method of claim 1, wherein correcting includes correcting at least one of the mass of the first particle, the density of
the first particle, or the force applied to the first particle so that when the acceleration of the first particle and the
acceleration of the second particle are respectively expressed using the drag coefficient, the terms for the constants a,
b, and c for the first particle are respectively equal to those for the second particle.

3. The method of claim 1, wherein a, b, and c are determined by the following equations 2 through 4.

[Formula 2]

$$a = 1\,5.\ 2\,1 + \frac{1\,0.\ 8\,2}{\psi} - \frac{0.\ 1\,4}{\psi^2}$$

(Equation 2)

[Formula 3]

$$b = 1\,3.\ 4\,1 - \frac{1\,0.\ 6\,4}{\psi} - \frac{0.\ 0\,6}{\psi^2}$$

(Equation 3)

[Formula 4]

$$c = -8.82 + \frac{5.70}{\psi} + \frac{0.23}{\psi^2}$$

(Equation 4)
(wherein $\psi$ is the sphericity of the particle)

4. The method of claim 1, the method further comprising calculating the constants a, b, and c in advance, wherein calculating the constants a, b, and c in advance includes fitting from an experimental data including one or more of sphericity, drag coefficient, and Reynolds number.

5. The method of claim 1,

   further comprising reading coarsening ratio,
   wherein generating the second particle data includes setting a size of the second particle at least based on the first particle data and the coarsening ratio.

6. The method of claim 1, wherein the first particle data includes at least one of a size of particle, a number of particle, sphericity of particle, or mass of particle.

7. A non-transitory storage medium storing a program for simulating particles motion in a fluid, the program being able to command a processor of an information processing device to execute steps comprising:

   reading a fluid data;
   reading a first particle data;
   coarse-graining particles at least based on the first particle data to generate a second particle data; and
   calculating particles motion at least based on the fluid data and the second particle data;
   wherein generating the second particle data includes correcting at least one of mass of the first particle, density of the first particle, or force applied to the first particle so that an acceleration of the second particle is equal to an acceleration of the first particle, corresponding to coarse-graining the particles,
   wherein calculating the particles motion includes calculating the particles motion at least based on a drag coefficient of the fluid, and
   wherein the drag coefficient is expressed by the following equation:

   [Formula 5]

$$C_D = \frac{a}{Re} + \frac{b}{\sqrt{Re}} + c$$

   (Equation 1)
   (wherein Re is the Reynolds number of the fluid and a, b, and c are respectively constants that can be determined in dependence on sphericity of the first particles)

8. A device comprising a non-transitory storage medium of claim 7.

100

FIG. 1

| | |
|---|---|
| Processor<br>110 | Memory<br>120 |
| Non-transitory storage<br>medium<br>130 | Communication module<br>140 |

200

FIG. 2

```
┌─────────────┐
│   Server    │
│     210     │
└─────────────┘
```

```
┌──────────────┐   ┌──────────────┐                    ┌──────────────┐
│  Terminal1   │   │  Terminal2   │                    │  TerminalN   │
│     220      │   │     220      │    · · · · · ·      │     220      │
└──────────────┘   └──────────────┘                    └──────────────┘
```

FIG. 3

| Reading a fluid data (S10) |
| --- |

↓

| Reading a first particle data (S20) |
| --- |

↓

| Coarse-graining particles at least based on the first particle data to generate a second particle data(S30) |
| --- |

↓

| Calculating particles motion at least based on the fluid data and the second particle data (S40) |
| --- |

FIG. 4

330

320

310

FIG. 5

FIG. 6

3 1 0

3 2 0

3 3 0

## INTERNATIONAL SEARCH REPORT

| International application No. |
| --- |
| **PCT/JP2023/030027** |

| A. | CLASSIFICATION OF SUBJECT MATTER |
| --- | --- |

*G16Z 99/00*(2019.01)i
FI:   G16Z99/00

According to International Patent Classification (IPC) or to both national classification and IPC

| B. | FIELDS SEARCHED |
| --- | --- |

Minimum documentation searched (classification system followed by classification symbols)

G16Z99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KUSHIMOTO, Kizuku. Development of Simpler Coarse-Grain Model for Analyzing Behavior of Particles in Fluid Flow. Processes. 24 June 2021, vol. 9, no. 7, 1098<br>entire text, all drawings | 1-8 |
| A | 森勇稀. 大規模DEM-CFDシミュレーションにおける数値安定化アルゴリズムの開発. 計算工学講演会論文集[CD-ROM]. 06 June 2018, vol. 23, F-09-01, (MORI, Yuki. A development of implicit algorithm of drag force for numerical simulation of large-scale fluidized bed. Proceedings of the Conference on Computational Engineering and Science.)<br>entire text, all drawings | 1-8 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 October 2023** | **10 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**EP 4 657 460 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000214134 A

**Non-patent literature cited in the description**

- *Processes,* 2021, vol. 9 (7), 1098
- **H. N. YOW et al.** *Advanced Powder Technol.*, 2005, vol. 16 (4), 363-372